# EUROPEAN PATENT APPLICATION

(11) **EP 4 491 370 A1**
(43) Date of publication of application: **15.01.2025**
(21) Application number: 23766393.5
(22) Date of filing: 08.02.2023
(51) Int. Cl.: B29C 55/02, B05B 1/02, F27D 7/06

(54) **BLOWOUT NOZZLE**

(30) Priority: 07.03.2022 JP 2022034277
(71) Applicant: Toray Industries, Inc., Tokyo 103-8666 (JP)
(72) Inventor: SHOJI, Hiroki, Otsu-shi, Shiga 520-8558 (JP); MAKI, Akihisa, Otsu-shi, Shiga 520-8558 (JP)
(74) Representative: Hoefer & Partner Patentanwälte mbB
(86) International application number: PCT/JP2023/004120
(87) International publication number: WO 2023/171213

(57) **Abstract**

The present invention provides a blowoff nozzle that blows out air to a film being conveyed, the blowoff nozzle including: a blowoff portion formed as an opening through which the air is blown out; and a flow passage member provided near the blowoff portion inside the blowoff nozzle, the flow passage member being configured to form a flow passage of the air from a downstream side in a film conveyance direction to the blowoff portion and a flow passage of the air from an upstream side in the film conveyance direction to the blowoff portion, the flow passages being substantially parallel to an inner wall surface of the blowoff nozzle around the blowoff portion along with a virtual plane passing through an opening surface of the blowoff portion.

## Description

### Field

The present invention relates to a blowoff nozzle.

### Background

As methods for manufacturing stretched films made of thermoplastic resin, a sequential biaxial stretching method and a simultaneous biaxial stretching method are known. In the sequential biaxial stretching method, an unstretched film made of thermoplastic resin is stretched in a longitudinal direction thereof to obtain a uniaxially stretched film, and the obtained uniaxially stretched film is put into a tenter oven and is stretched in the tenter oven in a width direction thereof. In the simultaneous biaxial stretching method, an unstretched film made of thermoplastic resin is put into a tenter oven and is stretched in the tenter oven in a longitudinal direction and a width direction thereof simultaneously.

Stretched films made of thermoplastic resin are widely used for various industrial material purposes such as packaging purpose. Among such films, sequential biaxially stretched films made of polyester, polyolefin, or polyamide resin are widely used in purposes where unstretched films are not usable, due to excellent mechanical characteristics, thermal characteristics, electrical characteristics, and the like, and the demand for the sequential biaxially stretched films has been increasing.

A problem with a tenter oven for manufacturing a stretched film made of thermoplastic resin is a phenomenon in which circulation of air is not completed in a chamber constituting the tenter oven such that air with a different set temperature flows into the chamber, outside air from the outside of the tenter oven flows into the oven, or air in the chamber of the tenter oven is blown out of the oven. All of such phenomena are phenomena in which air flows along a running direction of the film, and such a flow of air is referred to as a machine direction (MD) flow. The MD flow is caused by an airflow that accompanies the film when the film runs, a discrepancy between an amount of heated air supplied into the tenter oven and an amount of air exhausted from the tenter oven, and the like.

If the MD flow is generated, incoming air with a different temperature flowing from the outside of the chamber is mixed with heated air in the chamber while flowing near the film, and thus, the efficiency of heating the film is uneven, and extensive temperature unevenness occurs in the film. In the tenter oven, at least one process is performed among a preheating process of increasing the film to a desired temperature, a stretching process of extending the film to a desired width, a heat fixing process of performing thermal treatment to the film at a desired temperature, and a cooling process of cooling the film at a desired temperature. If the temperature unevenness occurs in the film during any of such process, the temperature unevenness results in thickness unevenness and characteristic unevenness of the film, and the product quality deteriorates. In addition to the deterioration of the product quality, the film may be torn in the tenter oven, and productivity may be reduced.

As a technique for restraining the MD flow with a different ambient temperature from flowing into and out of an adjacent chamber, Patent Literature 1 discloses a technique that blows out air toward a film surface with a blowoff nozzle inside an airflow control apparatus provided adjacent to the tenter oven and blocks the MD flow with an air curtain.

Here, in a stretched film manufacturing apparatus, it is desirable to provide the film and the blowoff nozzle away from each other, from the viewpoint of the configuration of the apparatus. As a technique that restrains the MD flow from flowing into and out of an adjacent chamber even when the film and the blowoff nozzle are provided away from each other, Patent Literature 2 discloses a blowoff nozzle that includes inscribed portions having inclined surfaces inclined to approach each other near a nozzle blowoff opening portion.

### Citation List

### Patent Literature

Patent Literature 1: WO 2017/115654 A
Patent Literature 2: WO 2021/075282 A

### Summary

### Technical Problem

By the way, in the blowoff nozzle that is used to restrain the MD flow with a different ambient temperature at an entrance and/or an exit of the tenter oven, air heated by a heat exchanger or the like is blown out toward the film. In particular, on the entrance side of the tenter oven, heated air is blown out from the blowoff nozzle to convey the film from an entrance of the airflow control apparatus provided adjacent to the tenter oven into the tenter oven while maintaining a film temperature without cooling or while heating. Accordingly, to suppress energy consumed for heating air blown out from the blowoff nozzle, an amount of air blown out from the blowoff nozzle is desirably small, and there is room for improvement in the technique disclosed in Patent Literature 2.

The present invention has been accomplished in view of the above-described problem, and provides a blowoff nozzle in which an amount of air blown out from the blowoff nozzle is reduced, so that energy required for heating air can be reduced, and even if a distance from a film is increased, temperature unevenness can be suppressed. Solution to Problem

The present invention to solve the above-described problem provides a blowoff nozzle that blows out air to a film being conveyed, the blowoff nozzle including: a blowoff portion formed as an opening through which the air is blown out; and a flow passage member provided near the blowoff portion inside the blowoff nozzle, the flow passage member being configured to form a flow passage of the air from a downstream side in a film conveyance direction to the blowoff portion and a flow passage of the air from an upstream side in the film conveyance direction to the blowoff portion, the flow passages being substantially parallel to an inner wall surface of the blowoff nozzle around the blowoff portion along with a virtual plane passing through an opening surface of the blowoff portion.

In the blowoff nozzle according to present invention, it is preferable that the flow passage member includes an opening portion formed in a surface facing the blowoff portion.

In the blowoff nozzle according to present invention, it is preferable that the blowoff portion and the opening portion overlap at least partially in a plan view in which the blowoff nozzle is viewed from a film running surface.

In the blowoff nozzle according to present invention, it is preferable that the opening portion is inside the blowoff portion in a plan view in which the blowoff nozzle is viewed from a film running surface.

In the blowoff nozzle according to present invention, it is preferable that a center line of the blowoff portion and a center line of the opening portion overlap in a cross-sectional view in which the blowoff nozzle is viewed in a film width direction.

### Advantageous Effects of Invention

According to the present invention, the amount of air blown out from the blowoff nozzle is reduced, so that energy required for heating air can be reduced, and even if the distance from the film is increased, temperature unevenness can be suppressed.

### Brief Description of Drawings

FIG. 1 is a diagram illustrating a schematic configuration of a film manufacturing apparatus including a blowoff nozzle according to an embodiment of the present invention.
FIG. 2 is a cross-sectional view of the film manufacturing apparatus corresponding to a cross section taken along line A-A in FIG. 1.
FIG. 3A is a diagram illustrating a blowoff nozzle that is a main configuration of the embodiment of the present invention and corresponds to a cross section taken along line B-B in FIG. 2.
FIG. 3B is a diagram illustrating a main configuration of another embodiment of the present invention.
FIG. 4 is a diagram illustrating a range of substantially parallel, and is a diagram illustrating only a tip portion of the blowoff nozzle of the present invention.
FIG. 5A is a diagram illustrating a main configuration of another embodiment of the present invention.
FIG. 5B is a diagram illustrating a main configuration of another embodiment of the present invention.
FIG. 5C is a diagram illustrating a main configuration of another embodiment of the present invention.
FIG. 6 is a diagram illustrating a configuration of a blowoff nozzle according to a comparative example.
FIG. 7 is a diagram illustrating a configuration of a blowoff nozzle according to a reference example. Description of Embodiments

Hereinafter, a mode for carrying out the present invention will be described in detail with the drawings. Note that the present invention is not limited to the following embodiments. The drawings referred to in the following description only schematically illustrate shapes, sizes, and positional relationships to such an extent that the contents of the present invention can be understood. That is, the present invention is not limited only to the shapes, sizes, and positional relationships exemplified in the drawings. In the description of the drawings, same portions are represented by same reference signs.

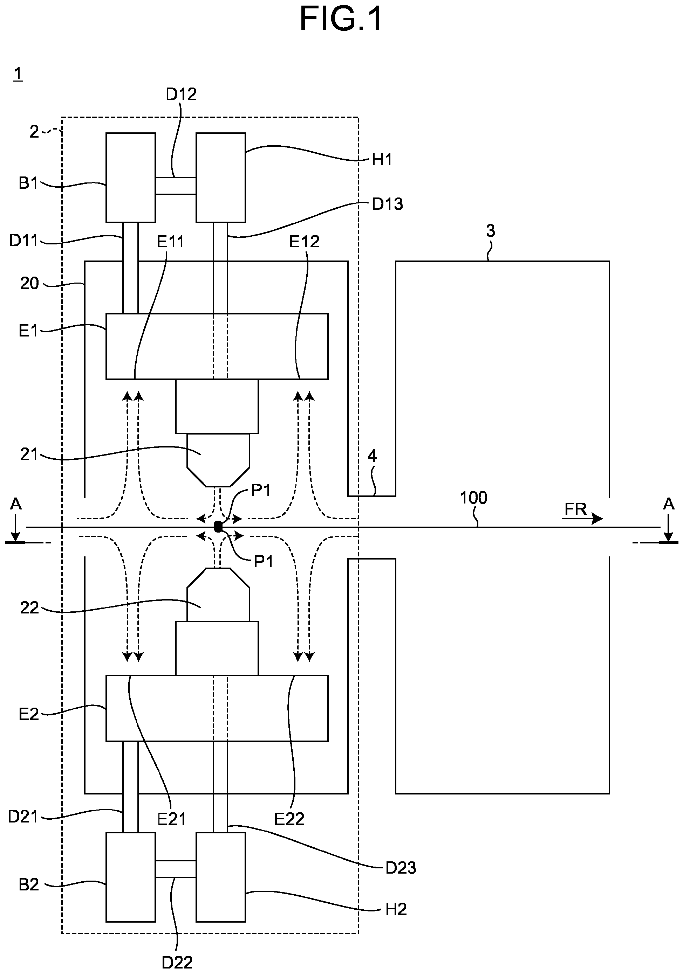

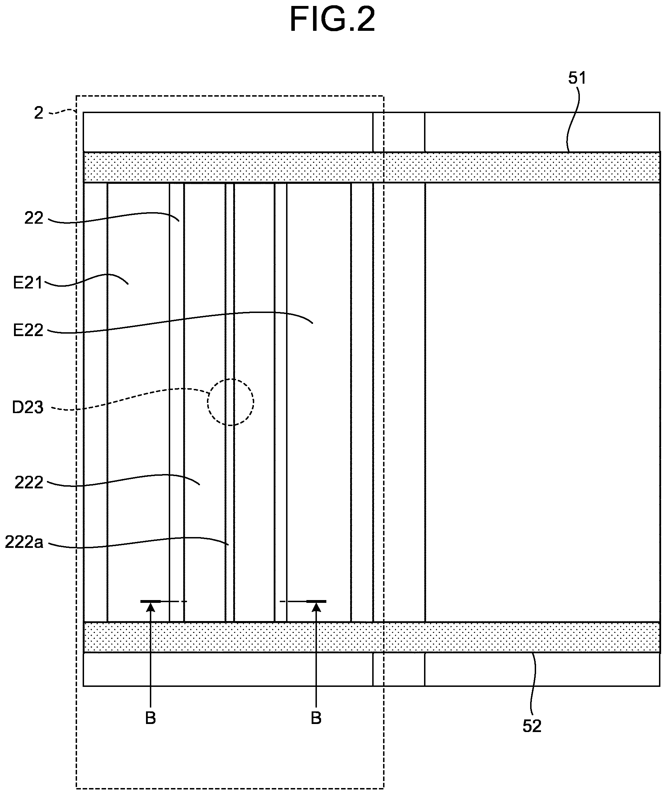

FIG. 1 is a diagram illustrating a schematic configuration of a film manufacturing apparatus including a blowoff nozzle according to an embodiment of the present invention. FIG. 2 is a cross-sectional view of the film manufacturing apparatus corresponding to a cross section taken along line A-A in FIG. 1. A film manufacturing apparatus 1 illustrated in FIGS. 1 and 2 includes an airflow control apparatus 2 and a tenter oven **3.** The film manufacturing apparatus 1 is a manufacturing apparatus for stretched films that employs a sequential biaxial stretching method or a simultaneous biaxial stretching method, and puts a film 100 made of thermoplastic resin into the tenter oven 3 and stretches the film 100 in at least one of a longitudinal direction and a width direction in the tenter oven 3. The longitudinal direction of the film 100 in FIG. 1 is a conveyance direction FR of the film and corresponds to a left-right direction in the drawing. The width direction of the film 100 (film width direction) is a direction perpendicular to the longitudinal direction and a thickness direction (an up-down direction on the paper surface) of the film, and corresponds to a direction perpendicular to the paper surface.

The airflow control apparatus 2 is provided in a pre-stage of the tenter oven 3 with respect to the conveyance direction FR of the film 100. After passing through the airflow control apparatus 2, the film 100 to be stretched is put into the tenter oven 3. The airflow control apparatus 2 is connected to the tenter oven 3 via a connecting section 4.

The film that can be applied to the airflow control apparatus 2 of the present invention is not particularly limited, and a known thermoplastic resin film that is heated and stretched in the tenter oven 3 can be applied.

The inside of the tenter oven 3 is heated to a set temperature when the film 100 is to be stretched. The tenter oven 3 has one end connected to the connecting section 4, and has the other end in which an opening is formed for conveying the film 100 to the outside.

The airflow control apparatus 2 includes a first blowoff nozzle 21 provided to face one surface (in FIG. 1, upper surface) of the film 100, and a second blowoff nozzle 22 provided to face the other surface (in FIG. 1, lower surface) of the film 100. Hereinafter, the "first blowoff nozzle 21" is simply referred to as a "blowoff nozzle 21". The "second blowoff nozzle 22" is simply referred to as a "blowoff nozzle 22". The blowoff nozzles 21 and 22 are housed in a box-shaped body 20. The box-shaped body 20 has one end in the conveyance direction of the film 100 connected to the connecting section 4, and has the other end in which an opening is formed for conveying the film 100 from the outside. Although a pair of blowoff nozzles facing each other is effective, effectiveness can be improved by providing a plurality of pairs of the blowoff nozzles.

In the airflow control apparatus 2, as a supply source of air to the blowoff nozzles 21 and 22, blowers B1 and B2, heat exchangers H1 and H2, exhaust mechanisms E1 and E2, and ducts D11, D12, D13, D21, D22, and D23 are provided. The blower B1 blows air sucked from the exhaust mechanism E1 to the heat exchanger H1 via the ducts D11 and D12. The air heated by the heat exchanger H1 is blown out from the blowoff nozzle 21 via the duct D13. In the exhaust mechanism E1, exhaust units E11 and E12 that suck the air blown out of the blowoff nozzle 21 or air carried by the MD flow are formed. The blower B2, the heat exchanger H2, the exhaust mechanism E2, and the ducts D21, D22, and D23 have similar functions to the blower B1, the heat exchanger H1, the exhaust mechanism E1, and the ducts D11, D12, and D13 described above, respectively, and in the exhaust mechanism E2, exhaust units E21 and E22 are formed.

Subsequently, ways of flowing of the air blown out from the blowoff nozzles 21 and 22 will be described with reference to FIG. 1 using the blowoff nozzle 22 as an example. The air blown out from the blowoff nozzle 22 travels toward the film 100 and hits the film 100. Thereafter, the air flowing to the upstream side and the downstream side of the conveyance direction FR of the film 100 is redirected, collides with the air flowing into the box-shaped body 20 to be turned into return air, and is sucked into the exhaust units E21 and E22.

Here, if air flowing into the apparatus along the lower surface of the film 100 from the outside of the apparatus as well as an accompanying flow generated in the conveyance direction FR of the film 100 flow into the box-shaped body 20 through a film conveyance inlet of the airflow control apparatus 2, the air is blocked and redirected by the air blown out from the blowoff nozzle 22, and is sucked into the exhaust unit E21 along with the return air. As such, the exhaust unit E21 sucks the air flowing from the outside of the apparatus, so that the air from the outside can be restrained from flowing into the tenter oven 3 and causing temperature unevenness in the tenter oven 3. The same applies to the air flowing from the film conveyance inlet into the box-shaped body 20 along the upper surface of the film 100 from the outside of the apparatus.

If air flowing out from the tenter oven 3 flows into the box-shaped body 20 along the lower surface side of the film 100 through a conveyance outlet (connecting section 4) of the airflow control apparatus 2, the air is blocked and redirected by the air blown out from the blowoff nozzle 22, and is sucked into the exhaust unit E22 along with the return air. As such, the exhaust unit E22 sucks the air flowing from the tenter oven 3, so that the air heated in the chamber of the tenter oven 3 can be restrained from being blown out of the chamber of the tenter oven 3, and deterioration of a working environment due to an increase in temperature of a working area around the tenter oven 3 can be restrained. In addition, air including sublimates from the film 100 is restrained from flowing out of the chamber of the tenter oven 3 by the MD flow, and thus productivity can be restrained from being reduced due to foreign matter defects caused by deposition and adhesion of sublimates outside the chamber of the tenter oven 3 and to the surface of the film 100. The same applies to the air flowing into the box-shaped body 20 along the upper surface of the film 100 from the tenter oven 3.

As described above, the blowoff nozzles 21 and 22 are desirably disposed to face the respective surfaces of the film 100. Accordingly, on both the upper surface side and the lower surface side of the film 100, the air flowing into the tenter oven 3 from the outside of the airflow control apparatus 2 or the air heated in the chamber of the tenter oven 3 being blown out of the chamber of the tenter oven 3 can be restrained, and an airflow blocking effect of the blowoff nozzles 21 and 22 can be maximally exerted.

Then, to reliably restrain the MD flow from passing in the conveyance direction FR of the film 100, it is important that the air blown out from the blowoff nozzles 21 and 22 has resilience enough to be not tilted in the conveyance direction FR of the film 100 by the MD flow. Here, as one of indices of resilience of the air blown out from the blowoff nozzles 21 and 22, the magnitude of a pressure at a stagnation point P1 is used. That is, it is important that the blowoff nozzles 21 and 22 blow out the air such that the pressure at the stagnation point P1 is increased and the pressure at the stagnation point P1 is desirably increased with a lower air volume.

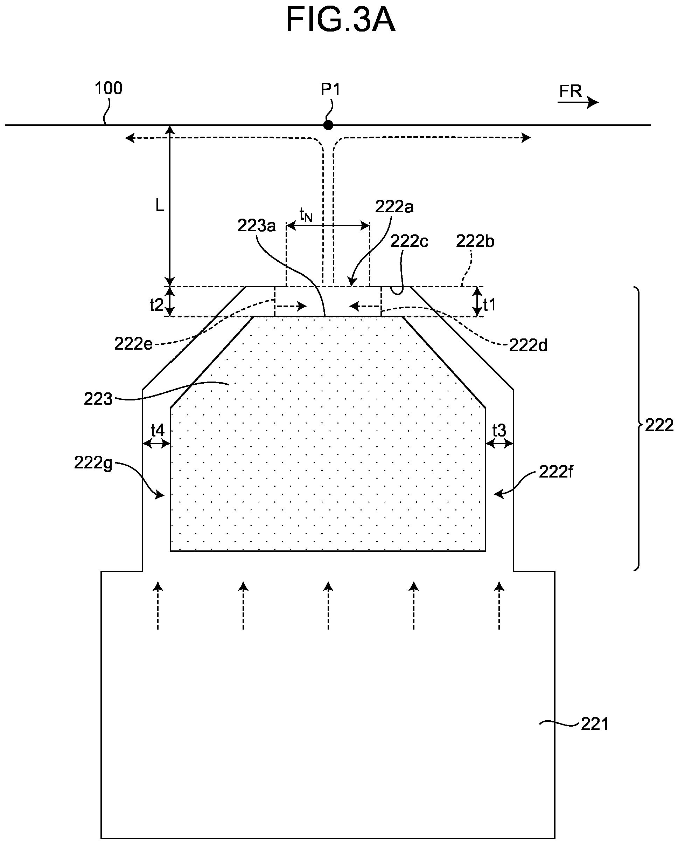

Subsequently, a configuration of the blowoff nozzle will be described. FIG. 3A is a cross-sectional view of the blowoff nozzle corresponding to a cross section taken along line B-B in FIG. 2. In FIG. 3A, although the configuration of the blowoff nozzle 22 is described as an example, the blowoff nozzle 21 also has a similar configuration. The blowoff nozzle 22 includes a pressure equalizing chamber 221 to which air is supplied from the duct D23, a nozzle portion 222 that extends from the pressure equalizing chamber 221 and blows out air to the outside, and a flow passage member 223 that is provided in the nozzle portion 222.

In the nozzle portion 222, a blowoff portion 222a that blows out air is formed on a side opposite to the side connected to the pressure equalizing chamber 221. The blowoff portion 222a is formed as a slit extending in a film width direction (see FIG. 2). The blowoff portion 222a may be a plurality of hole shapes arranged in the film width direction, instead of a slit shape. The blowoff portion 222a extends in parallel with the conveyance direction FR of the film 100.

The flow passage member 223 is provided inside the nozzle portion 222, and a surface 223a on a side disposed near the blowoff portion 222a and a blowoff portion nearby inner wall surface 222c of the nozzle portion 222 are substantially parallel to a virtual plane 222b passing through an opening surface of the blowoff portion 222a. With such a configuration, an air flow passage 222d from the downstream side in the film conveyance direction to the blowoff portion 222a and an air flow passage 222e from the upstream side in the film conveyance direction to the blowoff portion 222a that are substantially parallel to the virtual plane 222b are formed. The air flow passages are substantially parallel to the virtual plane 222b, so that an increase in air pressure can be made greater when the airs passing through the air flow passages 222d and 222e collide with each other and are merged, and resilient air can be blown out. When the air flow passages 222d and 222e are not substantially parallel to the virtual plane 222b, an increase in air pressure when the air passing through the air flow passage 222d and the air passing through the air flow passage 222e collide with each other and merged is reduced compared to when the air flow passages are substantially parallel to the virtual plane, and it is difficult to increase the pressure at the stagnation point P1 with a low air volume.

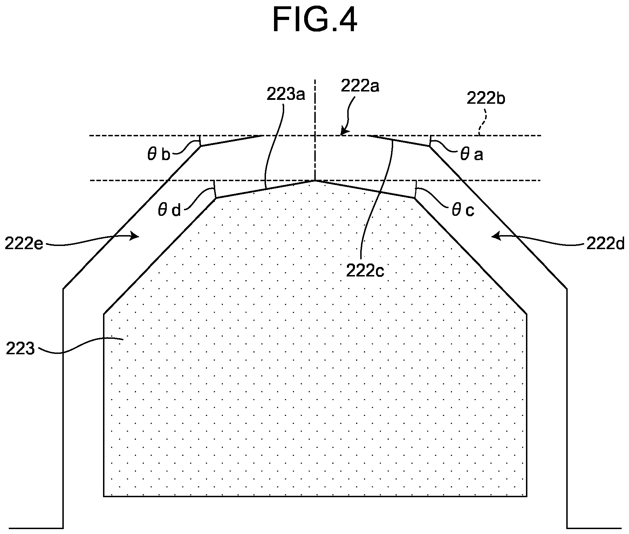

The description refers to FIG. 4. The air flow passages 222d and 222e being substantially parallel to the virtual plane 222b means that all of angles θc and θd of the surface 223a of the flow passage member with respect to the virtual plane 222b and angles θa and θb of the blowoff portion nearby inner wall surface 222c with respect to the virtual plane 222b are set to be equal to or less than 10°. The above-described angles θa, θb, θc, and θd are more desirably equal to or less than 5°.

The description refers to FIG. 3A again. An air flow in the configuration will be described with reference to FIG. 3A. The air supplied to the pressure equalizing chamber 221 flows into the nozzle portion 222 and passes through gas flow section 222f and 222g. Then, the airs flow through the air flow passages 222d and 222e, respectively, and collide with each other and are merged inside the blowoff nozzle 22. The air pressure is increased with merging, and the air is blown out from the blowoff portion 222a toward the film 100. Then, the air blown out from the blowoff portion 222a is also increased in air velocity with the increase in air pressure during collision and merging, such that an entrained amount of a still fluid between the blowoff portion 222a and the film 100 is also increased, and even if a comparatively small amount of air is supplied to the blowoff nozzle 22, the pressure at the stagnation point P1 can be increased.

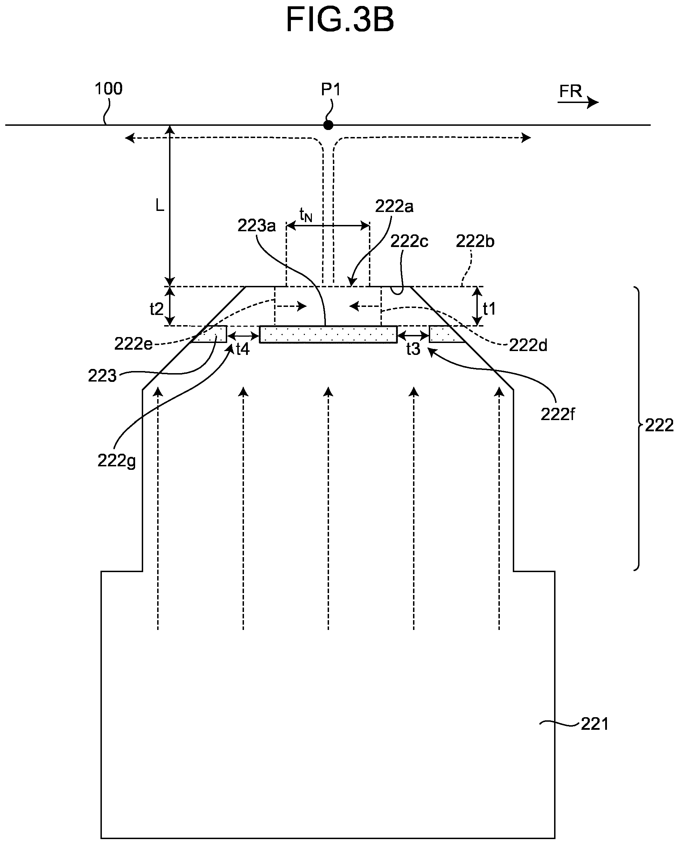

The shape of the flow passage member 223 is as described above, and may be the box-shaped body as illustrated in FIG. 3A or a thin-plate structure in which the gas flow section 222f and 222g are formed as illustrated in FIG. 3B, the gas flow section 222f and 222g being formed in a slit shape or a hole shape, as long as the air flow passages 222d and 222e are formed to be substantially parallel to the virtual plane 222b, and the gas flow section 222f and 222g that communicate the pressure equalizing chamber 221 and the air flow passages 222d and 222e are provided.

Flow passage widths t1 and t2 in the air flow passages 222d and 222e and flow passage widths t3 and t4 in the gas flow section 222f and 222g can be set to any magnitudes, and are not particularly limited, but are desirably secured to be equal to or greater than 1 mm since pressure loss in the entire apparatus increases and a large-capacity blower is required if the flow passage width is narrow. In blowing out substantially perpendicular air from the blowoff portion 222a toward the film 100, desirably, the flow passage widths t1 and t2 of the air flow passages 222d and 222e are the same and the flow passage widths t3 and t4 of the gas flow section 222f and 222g are the same, but the same cannot be said for a case where the blowoff nozzle is used as a so-called tilted nozzle that intentionally tilts the air blown out from the blowoff portion 222a toward the film 100 with respect to the conveyance direction FR of the film 100.

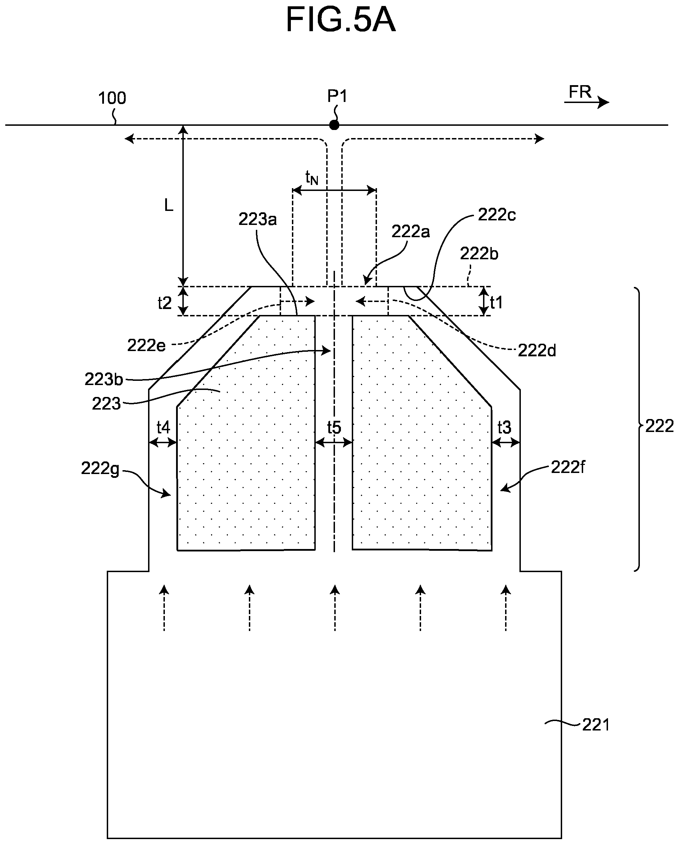

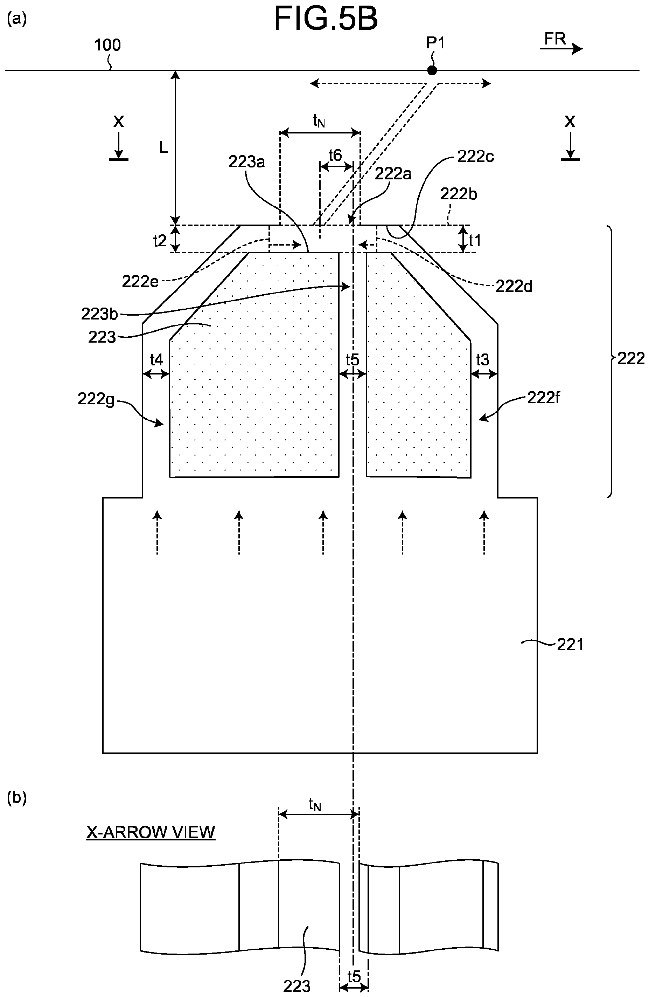

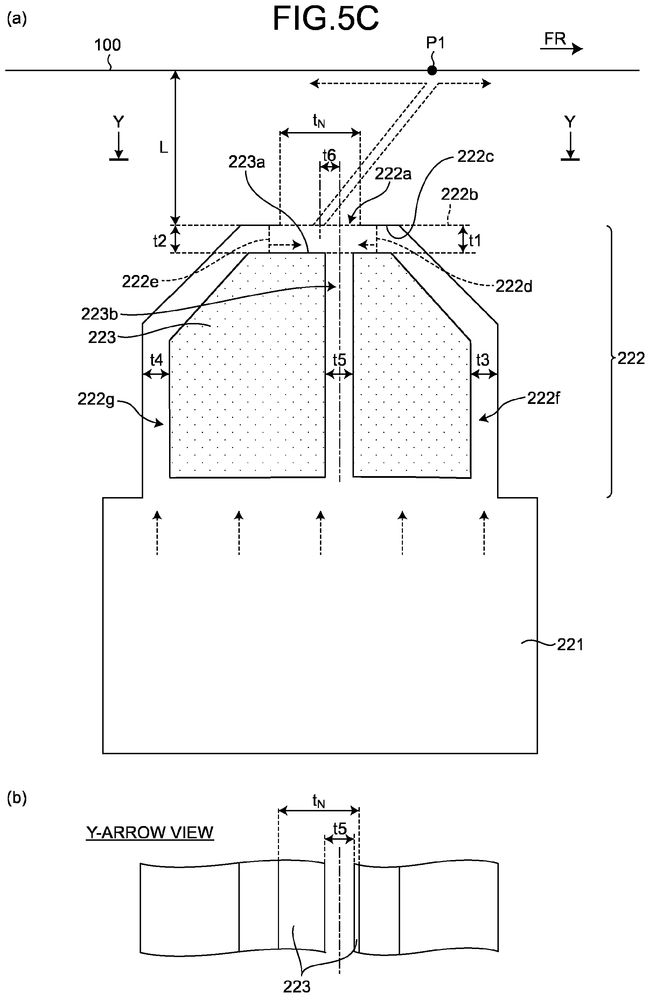

FIGS. 5A, 5B, and 5C are cross-sectional views illustrating a main configuration of a blowoff nozzle of another embodiment of the present invention. The flow passage member 223 provided in the blowoff nozzle 22 includes an opening portion 223b that communicates the pressure equalizing chamber 221 and the blowoff portion 222a, and air passes through the gas flow section 222f and 222g and the opening portion 223b. As such, the number of air passages is increased to make the air collide with each other and be merged while suppressing the pressure loss of the entire apparatus, and the air pressure and the air volume per unit time of the air blown out from the blowoff portion 222a can be increased.

A position of the opening portion 223b in the conveyance direction FR of the film 100 is not particularly limited, but a flow rate required for achieving the straightness of the air blown out from the blowoff portion 222a or a desired pressure at the stagnation point P1 changes depending on the position of the opening portion 223b.

In an embodiment of FIG. 5A, a center line of the blowoff portion 222a and a center line of the opening portion 223b are disposed to overlap in a cross-sectional view in which the blowoff nozzle 22 is viewed in the film width direction. In the embodiment, the air blown out from the opening portion 223b can suppress an influence of a difference in flow rate between the airs flowing from the air flow passages 222d and 222e, and air having high straightness can be blown out substantially perpendicularly from the blowoff portion 222a toward the film 100. On the other hand, since the airs passing through the air flow passages 222d and 222e collide with each other and are merged via the air blown out from the opening portion 223b, the increase in air pressure during collision and merging is small compared to the embodiment of FIGS. 3A and 3B.

In an embodiment of FIG. 5B, the center lines of the opening portion 223b and the blowoff portion 222a in the conveyance direction FR of the film 100 are shifted with respect to each other (see (a) of FIG. 5B), and in a plan view in which the blowoff nozzle 22 is viewed from a film running surface, the blowoff portion 222a and the opening portion 223b partially overlap (see (b) of FIG. 5B). That is, since the opening portion 223b and the air flow passage 222d overlap and the air blown out from the opening portion 223b increases the pressure in the air flow passage 222d, an amount of air passing through the air flow passage 222e increases with respect to an amount of air passing through the air flow passage 222d. Accordingly, since it is possible to give a difference in flow rate between the airs passing through the air flow passage 222d and the air flow passage 222e, the air blown out from the blowoff portion 222a toward the film 100 can be intentionally tilted to a direction of a flow passage in which the air flow rate is small. The air blown out from the opening portion 223b and the air passing through the air flow passage 222d are merged in the flow passage, collide and are merged with the air passing through the other air flow passage 222e, and are blown out from the blowoff portion 222a. That is, the air flow is similar to the air flow in FIGS. 3A and 3B, and the increase in pressure during collision and merging is higher than that in FIG. 5A. An amount in which the blowoff portion 222a and the opening portion 223b overlap can be determined to any value depending on desired straightness of air or desired pressure at the stagnation point P1.

In an embodiment of FIG. 5C, the center lines of the opening portion 223b and the blowoff portion 222a in the film conveyance direction are shifted (see (a) of FIG. 5C), and the opening portion 223b is inside the blowoff portion 222a in a plan view in which the blowoff nozzle 22 is viewed from the film running surface (see (b) of FIG. 5C). Here, since the pressure of the air flow passage 222d disposed close to the opening portion 223b increases, a flow rate of air passing through the air flow passage 222e can be increased, and the air blown out from the blowoff portion 222a toward the film 100 can be intentionally tilted in a direction of a flow passage in which the flow rate is small. However, since the opening portion 223b is not disposed in the air flow passage 222d, the tilt of the air is small compared to the embodiment of FIG. 5B. The increase in pressure during collision and merging is higher than that in the embodiment of FIG. 5A, but is low compared to the embodiment of FIG. 5B.

That is, in the embodiments of FIGS. 5A, 5B, and 5C, when the parameters excluding the position of the opening portion 223b in the film conveyance direction are the same, a tilt of jet air increases in an order of the embodiments of the FIGS. 5B, 5C, and 5A, and the flow rate required for achieving the increase in pressure during collision and merging, that is, a target stagnation pressure decreases in the order of the embodiments of FIGS. 5B, 5C, and 5A. On the other hand, the straightness of the jet air blown out from the blowoff portion 222a increases in the order of the embodiments of FIGS. 5A, 5C, and 5B.

In the present invention, when it is not clear whether the MD flow flows from the upstream side or the downstream side in the conveyance direction FR of the film 100, the air blown out from the blowoff portion 222a toward the film 100 is desirably perpendicular to the film 100, but when it is clear whether the MD flow flows from the upstream side or the downstream side in the conveyance direction FR of the film 100, the air blown out from the blowoff portion 222a can be tilted to blow toward the MD flow, so that the MD flow is effectively blocked while a comparatively small amount of air is supplied to the blowoff nozzle 22.

In the embodiments of the present invention described above, the flow passage member 223 is provided inside the blowoff nozzles 21 and 22 to form the flow passages of the air facing each other, so that the increase in pressure during air collision and merging is made large, and a resilient air curtain can be formed. Accordingly, since the amount of the air blown out from the blowoff nozzles 21 and 22 can be reduced, energy required for heating the air can be reduced, and even if the distance from the film 100 is increased, temperature unevenness can be suppressed.

### Examples

Hereinafter, the present invention will be described in more detail with examples. The examples are not intended to limit the interpretation of the present invention in any way.

In the following examples, the parameters of the blowoff nozzle were set and the air pressure (air volume) was analyzed for the configurations of the embodiments described above. In the analysis, an air volume was calculated when the air pressure at the stagnation point described above is 60 Pa.

In the determination of the respective examples, when the calculated air volume is smaller than that of a comparison target, since the effect of increasing the air volume as the blowoff nozzle is observed, the result was determined as "A", and when the calculated air volume is greater than that of the comparison target, since the effect of increasing the air volume is not observed, the result was determined as "B". Comparative Example 1 is the comparison target.

### (Example 1)

As illustrated in FIG. 3A, an analysis was performed using the blowoff nozzle 22 provided with the flow passage member 223 including no opening portion. A thickness of the flow passage member 223 (in FIG. 3A, a distance in an up-down direction toward the paper surface) was set to 42.5 mm, and the center line of the flow passage member 223 and the center line of the blowoff portion 222a were made to overlap. The angles θa to θd (see FIG. 4) of the blowoff portion nearby inner wall surface 222c and the surface 223a of the flow passage member with respect to the virtual plane 222b were set to 0° (the air flow passages 222d and 222e are parallel to the virtual plane 222b), a distance L was set to 150 mm, a distance t_{N} was set to 24 mm, a distance t1 of the flow passage width was set to 3 mm, a distance t2 of the flow passage width was set to 3 mm, a distance t3 of the flow passage width was set to 12 mm, and a distance t4 of the flow passage width was set to 12 mm.

### (Example 2)

As illustrated in FIG. 3B, an analysis was performed using the blowoff nozzle 22 provided with the flow passage member 223 having a thin-plate structure in which the gas flow section 222f and 222g are formed. The thickness of the flow passage member 223 (in FIG. 3B, the distance in the up-down direction toward the paper surface) was set to 1.5 mm, and the center line of the flow passage member 223 and the center line of the blowoff portion 222a were made to overlap. The angles θa to θd (see FIG. 4) of the blowoff portion nearby inner wall surface 222c and the surface 223a of the flow passage member with respect to the virtual plane 222b were set to 0° (the air flow passages 222d and 222e are parallel to the virtual plane 222b), the distance L was set to 150 mm, the distance t_{N} was set to 24 mm, the distance t1 was set to 3 mm, the distance t2 was set to 3 mm, the distance t3 was set to 12 mm, and the distance t4 was set to 12 mm.

### (Example 3)

An analysis was performed using the same blowoff nozzle 22 as in Example 1, except that the distance t3 was set to 8 mm and the distance t4 was set to 16 mm.

### (Example 4)

As illustrated in FIG. 5A, an analysis was performed using the same blowoff nozzle 22 as in Example 1, except that the flow passage member 223 including the opening portion 223b was provided. A width t5 of the opening portion 223b was set to 4 mm, and the center line of the opening portion 223b and the center line of the blowoff portion 222a were made to overlap.

### (Example 5)

An analysis was performed using the same blowoff nozzle 22 as in Example 4, except that the distance t3 was set to 8 mm and the distance t4 was set to 16 mm. That is, the analysis was performed using the same blowoff nozzle 22 as in Example 3, except that the flow passage member 223 including the opening portion 223b was provided.

### (Example 6)

As illustrated in FIG. 5B, an analysis was performed using the same blowoff nozzle 22 as in Example 4, except that the flow passage member 223 in which the position of the opening portion 223b is changed was provided. The width t5 of the opening portion 223b was set to 4 mm, and the center line of the opening portion 223b was positioned at a position 11 mm (distance t6) downstream of the center line of the blowoff portion 222a in the film conveyance direction.

### (Example 7)

As illustrated in FIG. 5C, an analysis was performed using the same blowoff nozzle 22 as in Example 4, except that the flow passage member 223 in which the position of the opening portion 223b is changed was provided. The width t5 of the opening portion 223b was set to 4 mm, and the center line of the opening portion 223b was positioned at a position 6 mm (distance t6) downstream of the center line of the blowoff portion 222a in the film conveyance direction.

### (Comparative Example 1)

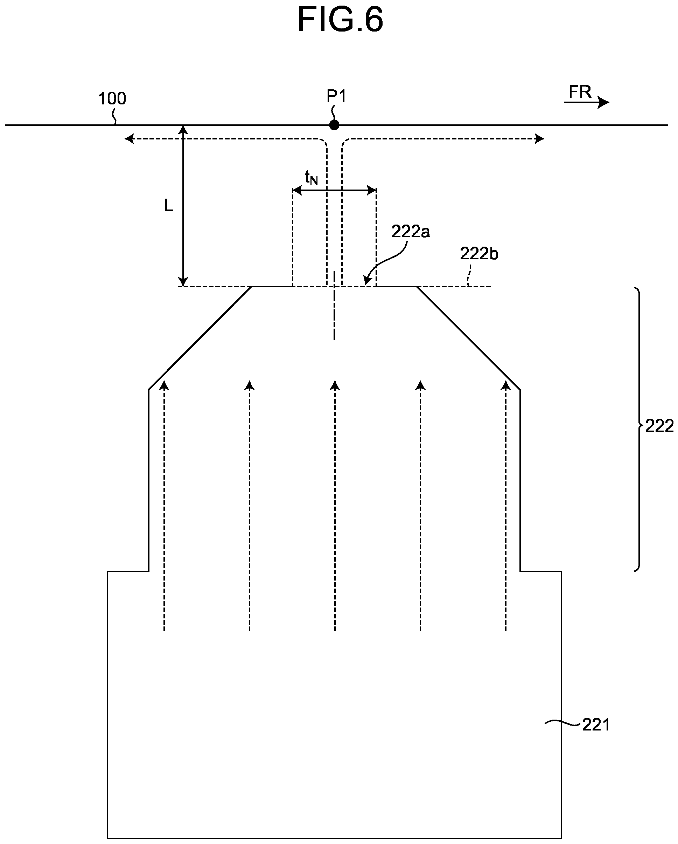

As illustrated in FIG. 6, an analysis was performed using the same blowoff nozzle 22 as in Example 1, except that no flow passage member was provided. The distance L was set to 150 mm, and the distance t_{N} was set to 24 mm.

### (Reference Example 1)

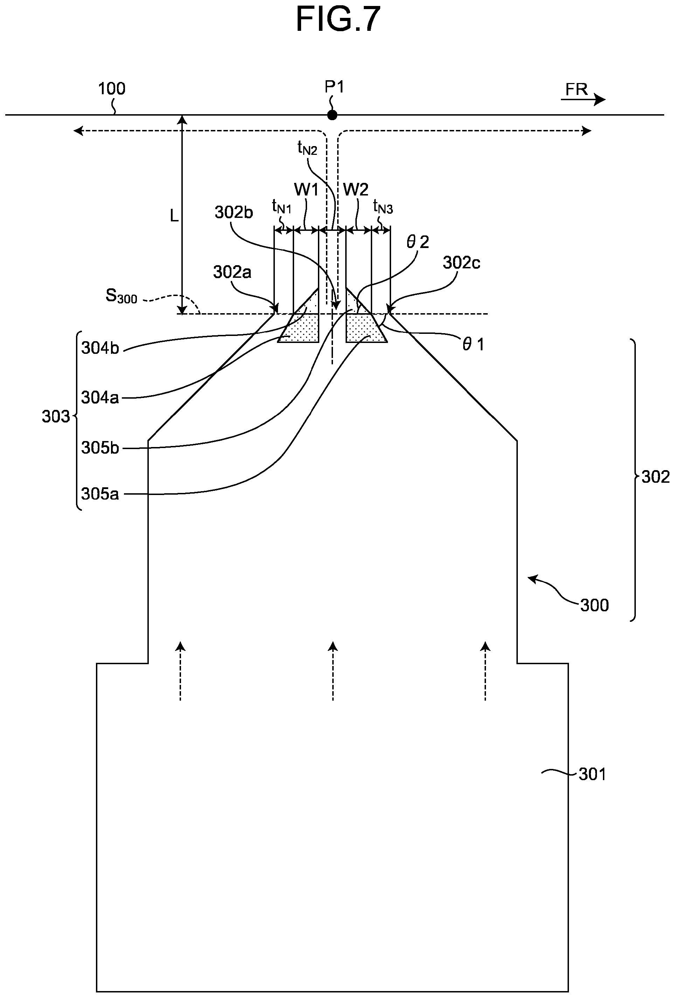

An analysis was performed using a blowoff nozzle 300 illustrated in FIG. 7. The blowoff nozzle 300 is a blowoff nozzle disclosed in Patent Literature 2. The blowoff nozzle 300 includes a pressure equalizing chamber 301, a blowoff portion 302 that extends from the pressure equalizing chamber and blows out air from opening portions 302a, 302b, and 302c to the outside, and a flow divider unit 303 that divides a flow passage of the air blown out from the blowoff portion 302. The flow divider unit 303 includes inscribed portions 304a and 305a that are provided in the blowoff portion 302, and protrusion portions 304b and 305b that protrude from the blowoff portion 302. In the blowoff nozzle 300, a distance between the blowoff portion 302 and a film 100 is denoted as L, a plane that passes through an opening surface of the blowoff portion 302 and is parallel to the opening surface is denoted as S₃₀₀, an angle between the inscribed portions 304a and 305a and the virtual plane S₃₀₀ are denoted as θ1 (> 0), an angle between the protrusion portions 304b and 305b and the virtual plane S₃₀₀ is denoted as θ2 (> 0), a sum total of distances of the opening portions 302a, 302b, and 302c of the blowoff portion 302 in the film conveyance direction is denoted as t_{N}, a length of the inscribed portion 304a on the virtual plane S₃₀₀ is denoted as W1, and a length of the inscribed portion 305a on the virtual plane S₃₀₀ is denoted as W2.

In Reference Example 1, an analysis was performed by setting the distance L to 150 mm, the distance t_{N} to 24 mm (a distance t_{N1} to 8 mm, a distance t_{N2} to 8 mm, and a distance t_{N3} to 8 mm), the angle θ1 to 45 deg, the angle θ2 to 45 deg, and the lengths W1 and W2 to 15 mm in the blowoff nozzle 300.

The parameters and analysis results of the examples, the comparative example, and the reference example are illustrated in Table 1.

**Table 1**

| | L [mm] | tN [mm] | t1 [mm] | t2 [mm] | t3 [mm] | t4 [mm] | t5 [mm] | t6 [mm] | Air volume Q [m3/ min/m] | Determination |
|---|---|---|---|---|---|---|---|---|---|---|
| Example 1 | 150 | 24 | 3 | 3 | 12 | 12 | - | - | 7.8 | A |
| Example 2 | 150 | 24 | 3 | 3 | 12 | 12 | - | - | 7.9 | A |
| Example 3 | 150 | 24 | 3 | 3 | 8 | 16 | - | - | 7.9 | A |
| Example 4 | 150 | 24 | 3 | 3 | 12 | 12 | 4 | 0 | 9.2 | A |
| Example 5 | 150 | 24 | 3 | 3 | 8 | 16 | 4 | 0 | 9.0 | A |
| Example 6 | 150 | 24 | 3 | 3 | 12 | 12 | 4 | 11 | 7.9 | A |
| Example 7 | 150 | 24 | 3 | 3 | 12 | 12 | 4 | 6 | 8.9 | A |
| Comparative Example 1 | 150 | 24 | - | - | - | - | - | - | 13.1 | - |
| Reference Example 1 | 150 | 24 | - | - | - | - | - | - | 10.5 | A |

In Comparative Example 1, an air volume of 13.1 m³/min/m was required to bring the pressure at the stagnation point to 60 Pa.

In Reference Example 1, the pressure at the stagnation point was brought to 60 Pa with an air volume of 10.5 m³/min/m smaller than that in Comparative Example 1.

In Examples 1 to 7, the pressure at the stagnation point was brought to 60 Pa with an air volume smaller than those in Reference Example 1 as well as Comparative Example 1. From the results, it was understood that it is possible to reduce an air volume required for obtaining a desired pressure at the stagnation point in the blowoff nozzle in which the flow passage member is provided inside the blowoff nozzle to form the air flow passages to make air collide with each other and be merged.

In Example 2, the pressure of 60 Pa at the stagnation point was formed with an air volume of 7.9 m³/min/m substantially equivalent to 7.8 m³/min/m in Example 1. From the result, it was understood that the flow passage member provided inside the blowoff nozzle may be a box-shaped body or may have a thin-plate structure.

In Example 3, while the pressure of 60 Pa at the stagnation point was formed with an air volume of 7.9 m³/min/m substantially equivalent to 7.8 m³/min/m of Example 1, the stagnation point was formed at a position 9 mm downstream of the center of the blowoff portion 222a in the film conveyance direction. The reason is that the distance t3 and the distance t4 were set to different magnitudes, so that a difference occurred between the amounts of air flowing the gas flow section 222f and 222g, and the amount of air flowing through the gas flow section 222f having a relatively narrow flow passage width was small. Accordingly, it was understood that, in blowing out the substantially perpendicular air from the blowoff portion 222a toward the film 100, the distance t1 and the distance t2 should be equal to each other and the distance t3 and the distance t4 must be equal to each other, and in intentionally tilting the air to be blown out, for example, the distance t3 and the distance t4 should be set to different magnitudes.

In Example 4, an air volume of 9.2 m³/min/m greater than 7.8 m³/min/m in Example 1 was required to form the pressure of 60 Pa at the stagnation point. The reason is that the flow rates of the air passing through the air flow passages 222d and 222e were decreased and the air passing through the air flow passages 222d and 222e put the air blown out from the opening portion 223b therebetween during collision and merging, thereby reducing the effect of increasing the air pressure during collision and merging. From the result, it was understood that the amount of air blown out from the opening portion 223b was desirably small to increase the stagnation point pressure.

In Example 5, while an air volume of 9.0 m³/min/m greater than 7.8 m³/min/m in Example 1 or 7.9 m³/min/m in Example 3 was required to form the pressure of 60 Pa at the stagnation point, the position of the stagnation point was formed at a position 4 mm downstream of the center of the blowoff portion 222a in the film conveyance direction, and air having high straightness was blown out from the blowoff portion 222a compared to 9 mm in Example 3. The reason is that, the flow rates of the air passing through the air flow passages 222d and 222e were decreased and the air passing through the air flow passages 222d and 222e put the air blown out from the opening portion 223b therebetween during collision and merging, thereby reducing the effect of increasing the air pressure during collision and merging, so the air volume required for increasing the pressure at the stagnation point was increased, but the air passing through the air flow passages 222d and 222e was made to collide with the air having high straightness blown out from the opening portion 223b, so that air having comparatively high straightness was blown out from the blowoff portion 222a even when there was a difference between the amounts of air flowing in the air flow passages 222d and 222e. Accordingly, it was understood that the opening portion 223b was provided in the flow passage member 223, so that air having high straightness was blown out from the blowoff portion 222a.

In Example 6, while the pressure of 60 Pa at the stagnation point was formed with an air volume of 7.9 m³/min/m substantially equivalent to 7.8 m³/min/m in Example 1, the stagnation point was formed at a position 18 mm downstream of the center of the blowoff portion 222a in the film conveyance direction. In Example 7, an air volume of 8.9 m³/min/m greater than 7.8 m³/min/m in Example 1 was required to form the pressure of 60 Pa at the stagnation point, and the stagnation point was formed at a position 8 mm downstream of the center of the blowoff portion 222a in the film conveyance direction. The reason that the required air volume can be further reduced in Example 6 than in Example 7 is because, in Example 6, a part of the opening portion 223b overlapped the air flow passage 222d, the air blown out from the opening portion 223b and the air passing through the air flow passage 222d were merged and integrated in the air flow passage 222d, and the air flow was equivalent to the air flows in Examples 1 and 2. The reason that the air was tilted and the position of the stagnation point was shifted to the downstream side in the film conveyance direction is because the position of the opening portion 223b was moved to the downstream side in the film conveyance direction, so that the pressures of the air flow passage 222d and the opening portion 223b were increased, the flow rate of the air passing through the air flow passage 222e was increased, and a difference in flow rate occurred between the air flow passages 222d and 222e. Therefore, it was understood that, to blow out air having high straightness from the blowoff portion 222a, the center line of the blowoff portion 222a in the film conveyance direction and the center line of the opening portion 223b are desirably overlapped. In other words, it was understood that, to intentionally tilt air, the opening portion 223b is desirably disposed laterally asymmetrically with respect to the center line of the blowoff portion 222a in the film conveyance direction.

### Industrial Applicability

The blowoff nozzle of the present invention can be desirably applied to heating and stretching process in a tenter oven of a film manufacturing facility, and the scope of application is not limited thereto.

### Reference Signs List

1 FILM MANUFACTURING APPARATUS
2 AIRFLOW CONTROL apparatus
3 TENTER OVEN
4 CONNECTing section
20 BOX-SHAPED BODY
21 FIRST BLOWOFF NOZZLE (BLOWOFF NOZZLE)
22 SECOND BLOWOFF NOZZLE (BLOWOFF NOZZLE)
100 FILM
221 PRESSURE EQUALIZING CHAMBER
222 NOZZLE PORTION
222a BLOWOFF PORTION
222b VIRTUAL PLANE
222c BLOWOFF PORTION NEARBY INNER WALL SURFACE
222d, 222e AIR FLOW PASSAGE
222f, 222g GAS FLOW SECTION
223 FLOW PASSAGE MEMBER
223a SURFACE NEAR BLOWOFF PORTION
223b OPENING PORTION
B1, B2 BLOWER
D11, D12, D13, D21, D22, D23 DUCT
E1, E2 EXHAUST MECHANISM
E11, E12, E21, E22 EXHAUST UNIT
H1, H2 HEAT EXCHANGER

## Claims

1. A blowoff nozzle that blows out air to a film being conveyed, the blowoff nozzle comprising:
a blowoff portion formed as an opening through which the air is blown out; and
a flow passage member provided near the blowoff portion inside the blowoff nozzle, the flow passage member being configured to form a flow passage of the air from a downstream side in a film conveyance direction to the blowoff portion and a flow passage of the air from an upstream side in the film conveyance direction to the blowoff portion, the flow passages being substantially parallel to an inner wall surface of the blowoff nozzle around the blowoff portion along with a virtual plane passing through an opening surface of the blowoff portion.

2. The blowoff nozzle according to claim 1,
wherein the flow passage member includes an opening portion formed in a surface facing the blowoff portion.

3. The blowoff nozzle according to claim 2,
wherein the blowoff portion and the opening portion overlap at least partially in a plan view in which the blowoff nozzle is viewed from a film running surface.

4. The blowoff nozzle according to claim 2,
wherein the opening portion is inside the blowoff portion in a plan view in which the blowoff nozzle is viewed from a film running surface.

5. The blowoff nozzle according to any one of claims 2 to 4,
wherein a center line of the blowoff portion and a center line of the opening portion overlap in a cross-sectional view in which the blowoff nozzle is viewed in a film width direction.
